# EUROPÄISCHE PATENTSCHRIFT

(11) **EP 1 167 822 B1**
(45) Veröffentlichungstag und Bekanntmachung des Hinweises auf die Patenterteilung: **16.08.2006**
(21) Anmeldenummer: 01125228.5
(22) Anmeldetag: 03.11.1997
(51) Int. Cl.: F16H 1/22, F16H 25/20, H02K 7/06, H02K 7/116, H02K 16/00

(54) **Einrichtung zur Erzeugung einer Längsbewegung und/oder einer Drehbewegung**
Arrangement for producing a rotary or a linear movement
Dispositif pour la production d'un mouvement rotatif ou linéaire

(43) Veröffentlichungstag der Anmeldung: 02.01.2002
(62) Teilanmeldung aus: 97119194.5
(73) Patentinhaber: HONEYWELL AG, 63067 Offenbach am Main (DE)
(72) Erfinder: Palatzky, Roland, Dipl.-Ing., 86356 Neussaes (DE)
(74) Vertreter: TBK-Patent

(56) Entgegenhaltungen:
- EP-A- 0 325 027
- EP-A- 0 551 197
- DE-A- 3 544 669
- US-A- 4 179 944
- PATENT ABSTRACTS OF JAPAN vol. 1997, no. 12, 25. Dezember 1997 (1997-12-25) -& JP 09 222153 A (NIPPON SEIKO KK), 26. August 1997 (1997-08-26)
- PATENT ABSTRACTS OF JAPAN vol. 015, no. 029 (E-1026), 23. Januar 1991 (1991-01-23) -& JP 02 273050 A (HINO MOTORS LTD), 7. November 1990 (1990-11-07)
- PATENT ABSTRACTS OF JAPAN vol. 1998, no. 14, 31. Dezember 1998 (1998-12-31) -& JP 10 257716 A (TAMAGAWA SEIKI CO LTD), 25. September 1998 (1998-09-25)

## Beschreibung

Die Erfindung betrifft eine Einrichtung zur Erzeugung einer Längsbewegung und/oder einer Drehbewegung, mit zwei oder mehreren, insbesondere vier, Elektromotoren, deren Motorwellen Ritzel tragen, die direkt in die Außenverzahnung eines gemeinsamen Sonnenrades eingreifen und dieses antreiben.

Solche Einrichtungen werden zum Antrieb der verschiedensten Bauteile, beispielsweise in der Luftfahrt, eingesetzt und häufig als "Aktuatoren" bezeichnet. Insbesondere beim Einsatz in der Luftfahrt, also in Flugzeugen, ist es aus sicherheitstechnischen Gründen günstig, den Aktuator so auszuführen, daß bei Auftreten eines einfachen mechanischen Fehlers (beispielsweise Versagen, Bruch oder Verlieren eines Bauteiles) nicht ein Ausfall des gesamten Aktuators folgt.

Bekannte elektromechanische Aktuatoren führen z. B. zwei Elektromotore auf ein Differentialgetriebe, das dann Längs- oder Drehbewegungen erzeugt. Solche Differentialgetriebe sind jedoch sehr aufwendig und teuer.

Aus der Offenlegungsschrift DE 3544669 A1, das die Merkmale des Oberbegriffs des Anspruchs 1 zeigt, ist ein numerisch ein numerisch gesteuertes elektromechanisches Präzisionsantriebssystem bekannt. Dieses System weist um ein Mittelzahnrad als Sonnenrad angeordnete Motoren auf, deren Wellen Ritzel tragen, die mit dem Sonnenrad in Eingriff sind. In der Nabe des Sonnenrads ist ein Antrieb für eine Gewindespindel vorgesehen. Durch die Drehung der Ritzel der einzeln angetriebenen Motoren und die daraus resultierende Bewegung des Sonnenrads wird eine Dreh- und/oder Längsbewegung der Gewindespindel erreicht.

Es ist die Aufgabe der Erfindung eine Einrichtung zur Erzeugung einer Längsbewegung und/oder Drehbewegung zu schaffen, deren Funktion auch bei einem Ausfall einzelner Bauteile sichergestellt ist.

Die Aufgabe der Erfindung wird durch eine Einrichtung zur Erzeugung einer Längsbewegung und/oder Drehbewegung gemäß Anspruch 1 gelöst.

Erfindungsgemäß trägt ein Sonnenrad eine Spindelmutter, welche auf eine Gewindespindel wirkt und diese bei Drehung der Spindelmutter in eine Längsbewegung versetzt.

Erfindungsgemäß wird hierdurch eine gattungsgemäße Einrichtung zur Verfügung gestellt, welche die Drehbewegung der Elektromotoren in eine Längsbewegung umwandeln kann. Dabei ist gleichzeitig eine große Ausfallsicherheit gegeben, da die Längsbewegung auch dann ausgeführt werden kann, wenn einzelne Motoren ausfallen.

Gemäß einer günstigen Variante ist vorgesehen, daß die Motorwellen jeweils ein Ritzel mit räumlich getrennten Verzahnungen tragen, wobei die Verzahnung jedes Ritzels jeweils in eine gesonderte Sonnenrad-Verzahnung am Sonnenrad eingreifen. Die Verwendung eines von mehreren Ritzeln angetriebenen gemeinsamen Sonnenrades erlaubt eine verhältnismäßig einfache Konstruktion. Bei Sonnenrädern und Ritzeln mit nur einer Verzahnung besteht jedoch die Gefahr, daß bei Bruch eines Ritzels die gesamte

Sonnenrad-Verzahnung zerstört wird und damit der Antrieb lahmgelegt wird. Gemäß der Erfindung weist nun jedes Ritzel zumindest zwei räumlich getrennte Verzahnungen auf, die in gesonderte Sonnenrad-Verzahnungen am Sonnenrad eingreifen. Damit ist also der Kraftübertragungsweg von der Motorwelle auf das Sonnenrad zumindest in doppelter Ausführung vorhanden, sodaß bei Ausfall des einen Übertragungsweges immer noch zumindest ein weiterer zur Verfügung steht.

Die Ritzel können jeweils einstückig ausgeführt sein, wobei die zwei gesonderten Verzahnungen in axialem Abstand geometrisch getrennt am länglichen Ritzel ausgebildet sind. Es besteht aber natürlich auch die Möglichkeit, daß das Ritzel aus zwei Einzelritzeln aufgebaut ist, die beispielsweise verdrehsicher auf einer gemeinsamen Welle oder auf der Motorwelle sitzen. Auch das Sonnenrad kann gemäß einer bevorzugten Ausführungsform aus mindestens zwei gesonderten, miteinander verbundenen Teilen bestehen, wobei die Sonnenrad-Verzahnungen an verschiedenen Teilen des Sonnenrades ausgebildet oder angebracht sind, um die Ausfallsicherheit zu erhöhen.

Gemäß einer weiteren Variante ist vorgesehen, daß einer der Elektromotoren abwechselnd als Generator betrieben wird und die erzeugten Stromsignale einer Überwachungsvorrichtung zuführbar sind.

Damit ist es möglich, nicht funktionierende Elektromotore vorzeitig zu erkennen. Dabei werden die kleineren Elektromotoren (beispielsweise vier) so dimensioniert, daß bereits weniger als alle (beispielsweise drei) ausreichend sind, um die Nennlast zu bringen. Zumindest ein Motor kann abwechselnd durch die Steuerung als Generator betrieben werden und dadurch überwacht werden. Wenn dieser Motor als Generator nicht mehr einwandfrei funktioniert, kann auf einen Fehler des Motors geschlossen werden. Dies führt durch die Tatsache, daß ohnehin mehrere Motoren zum Einsatz kommen, noch nicht zum Ausfall der gesamten Baugruppe, erlaubt aber eine frühzeitige Fehlererkennung.

Damit bei Blockieren eines Motors die Ritzel das Sonnenrad nicht zerstören können, ist gemäß einer weiteren Variante der Erfindung vorgesehen, daß die Ritzel auf der Motorwelle durch Überlast-Steuerelemente, vorzugsweise Scherstifte, befestigt sind.

Bei Blockieren eines Motors scheren die übrigen Motoren über das Sonnenrad den Scherstift ab und die Ritzelwelle des blockierenden Motors kann sich frei drehen und blockiert somit nicht den gesamten Antrieb.

Um bei Bruch eines Wälz- oder Kugellagers für das Sonnenrad eine Notfunktion zu ermöglichen, sind Not-Gleitlager vorgesehen, die bei Versagen des Wälz- oder Kugellagers das Sonnenrad, vorzugsweise in axialer Richtung, führen.

Die Gewindespindel des Spindelantriebs ist vorzugsweise gemäß einer weiteren Variante der Erfindung zwei- oder mehrteilig ausgeführt, wobei die beiden Teile koaxial angeordnet und miteinander mechanisch verbunden sind. Damit ist sichergestellt, daß bei Ausfall des einen oder anderen Gewindespindelteiles immer noch der andere die Funktion der gesamten Anordnung sicherstellt.

Weitere Vorteile und Einzelheiten der Erfindung werden anhand der nachfolgenden Figurenbeschreibung näher erläutert.
Die Fig. 1 zeigt einen schematischen Längsschnitt durch ein Ausführungsbeispiel der erfindungsgemäßen Einrichtung,
die Fig. 2 zeigt einen Schnitt gemäß der Linie A-A der Fig. 1,
die Fig. 3 zeigt einen Schnitt gemäß der Linie B-B der Fig. 1.

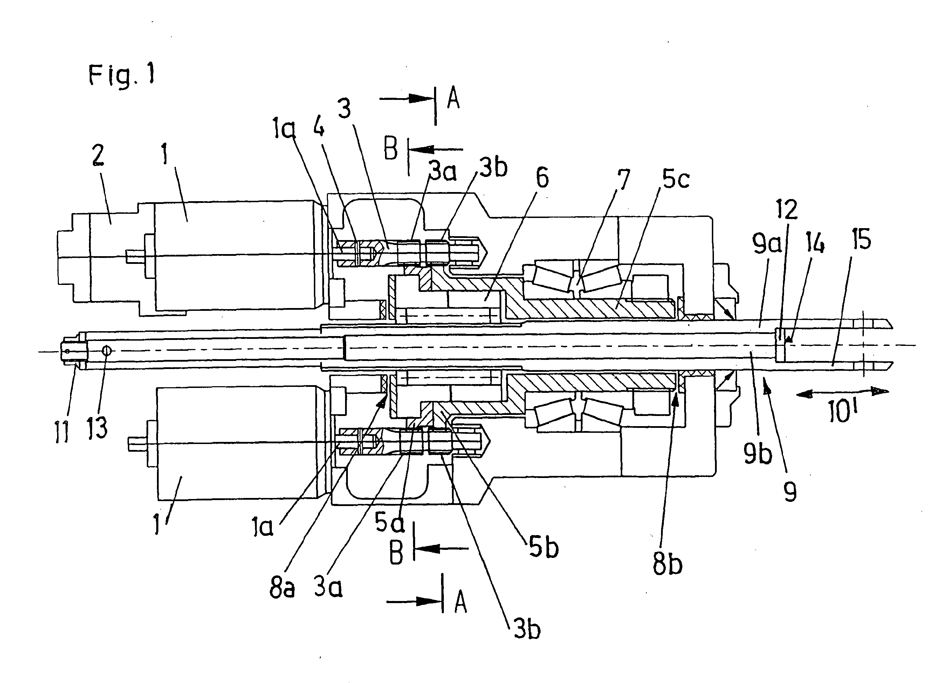

Die in Fig. 1 dargestellte Einrichtung dient zur Erzeugung einer Längsbewegung in Richtung des Doppelpfeiles 10 aus einer Drehbewegung von vier kleinen Elektromotoren 1. Die gesamte Einrichtung bzw. Aktuator ist günstigerweise in einem nicht näher dargestellten Gehäuse untergebracht. Die elektrische Steuerung für die Motoren 1 befindet sich vorteilhafterweise außerhalb des Gehäuses und ist ebenfalls nicht näher dargestellt.

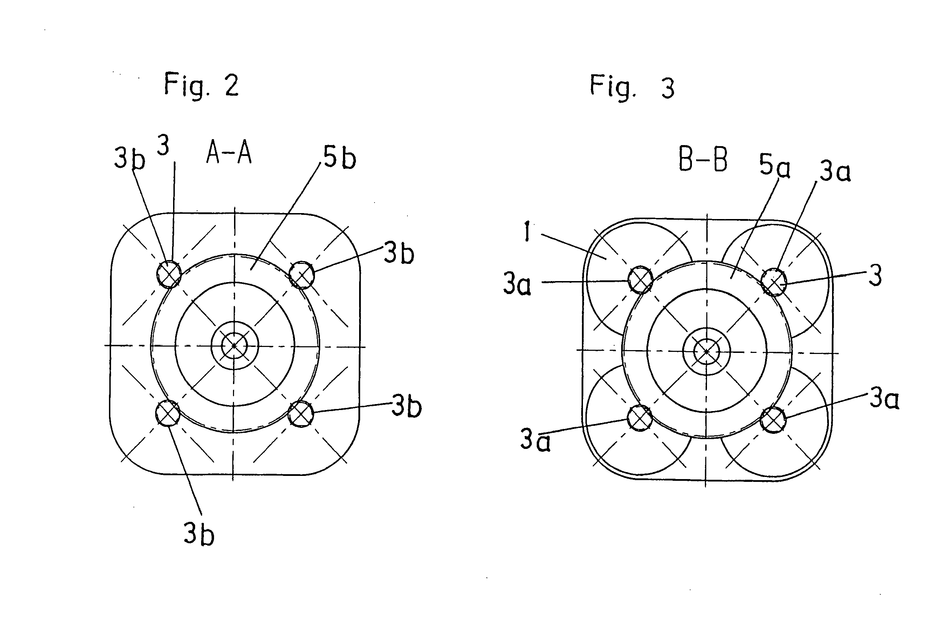

Die vier kleinen Elektromotoren, welche in den vier Quadranten um das zweiteilige Sonnenrad 5a, 5b herum angeordnet sind - wie dies Fig. 3 zeigt - treiben jeweils eine Motorwelle 1a an. Wie bereits erwähnt, können die Motoren durch die Steuerung so betrieben werden, daß jeweils nur drei Motoren antreiben, während der vierte Motor als Generator betrieben wird und in einer Überwachungsvorrichtung dessen Stromsignale ausgewertet werden.

Außerdem ist die Hälfte der Motoren (im vorliegenden Fall zwei) mit einer elektromagnetischen Bremse 2 ausgerüstet, die im stromlosen Zustand bremsen. Diese Bremsen haben die Aufgabe, in den Endlagen die Last sicher zu halten.

Die Motorwelle 1 a jedes Elektromotors 1 trägt jeweils ein längliches Ritzel, das zwei räumlich getrennte Verzahnungen 3a und 3b mit axialem Abstand zueinander aufweist. Diese Verzahnungen 3a und 3b greifen in gesonderte Sonnenrad-Verzahnungen am zweiteiligen Sonnenrad 5a und 5b ein, wie dies die Fig. 1 bis 3 zeigen. Es ist zwischen Sonnenrad und Ritzel kein Zwischengetriebe vorgesehen. Die Ritzel 3 sind jeweils einstückig ausgeführt und weisen einen länglichen Grundkörper auf, auf dem die Verzahnungen 3a und 3b einstückig ausgebildet sind.

Das Sonnenrad trägt eine Spindelmutter 6 eines Rollengewindetriebes. Ein Teil des Sonnenrades ist am vorderen Ende der Spindelmutter befestigt, ein anderer Teil am hinteren Ende der Spindelmutter. Bei Versagen eines Sonnenradteiles übernimmt der andere Teil die komplette Last. Die Spindelmutter selbst ist ebenfalls zweiteilig ausgeführt und wirkt über eine größere Anzahl von Gewinderollen auf die Gewindespindel, wobei solche Spindelmuttern handelsüblich erhältlich sind. Ein Abschnitt 5c des Sonnenrades ist als Lagertopf ausgebildet, der über ein Wälz- oder Kugellager 7 drehbar gelagert ist. Bei Versagen dieses Lagertopfes bzw. des Wälzlagers 7 fällt die Antriebsgruppe in die Not-Gleitlager 8a bzw. 8b, die das Sonnenrad 5a, 5b in axialer Richtung führen. Der Antrieb bleibt dadurch funktionsfähig.

Die Gewindespindel ist zweiteilig ausgeführt. Die äußere Gewindestange 9a ist hohl gebohrt. Ein Lastbolzen 9b ist als zweiter Teil in diese Gewindestange eingesteckt und darin mittels der Mutter 11 verspannt, wobei am gegenüberliegenden Ende der Kopf 12 satt anliegt. Auf einer Seite erfolgt die Verdrehsicherung der beiden Gewindespindelteile 9a und 9b über einen durchgesteckten Stift 13. Auf der anderen Seite erfolgt diese verdrehsichere Verbindung dadurch, daß der Kopf 12 einen nichtkreisrunden Querschnitt aufweist und verdrehsicher im Bereich des Bodens 14 der Betätigungsgabel 15 der Gewindespindel anliegt. Beide Gewindespindelteile können beim Versagen des anderen Gewindespindelteiles Drehmomente und Zug/Druck-Kräfte vollständig übertragen.

Wie bereits erwähnt, ist das Gehäuse nicht dargestellt, es kann sich dabei um ein mehrteiliges Gehäuse handeln, das bis auf die elektrische Steuerung alle Baugruppen enthält. Mehrere Zuganker des Gehäuses können die Gehäuselasten übertragen, sodaß bei Versagen eines der Zuganker samt Verschraubung kein Ausfall der ganzen Einheit eintritt. Nicht dargestellte verstellbare fehlerüberwachte Sensoren können den Aktuator-Hub bestimmen. Die Versorgungsleitungen von Motoren, Bremsen und Sensoren werden über zwei oder mehrere Filterplatinen auf zwei oder mehrere unterschiedliche Gerätestecker verteilt, sodaß auch in diesem Bereich eine hohe Ausfallsicherheit gewährleistet ist.

## Patentansprüche

1. Einrichtung zur Erzeugung einer Längsbewegung und/oder einer Drehbewegung, mit zwei oder mehreren, insbesondere vier, Elektromotoren, deren Motorwellen Ritzel (3a, 3b) tragen, die direkt in die Außenverzahnung eines gemeinsamen Sonnenrades (5a, 5b) eingreifen und dieses antreiben, wobei das Sonnenrad eine Spindelmutter (6) trägt, welche auf eine Gewindespindel (9) wirkt und diese bei Drehung der Spindelmutter (6) in eine Längsbewegung versetzt, **dadurch gekennzeichnet, dass** die Gewindespindel (9) zwei- oder mehrteilig ausgeführt ist, wobei die Teile (9a, 9b) der Gewindespindel koaxial angeordnet und mechanisch miteinander verbunden sind.

2. Einrichtung nach Anspruch 1, **dadurch gekennzeichnet, dass** die beiden Teile (9a, 9b) der Gewindespindel (9) über einen quer durchgesteckten Stift, der vorzugsweise nahe dem einen Ende der Gewindespindel angeordnet ist, miteinander verdrehsicher verbunden sind.

3. Einrichtung nach Anspruch 1 oder 2, **dadurch gekennzeichnet, dass** der koaxial innere Teil der Gewindespindel am einen Ende einen im Durchmesser erweiterten Kopf (12), der an einem Absatz des äußeren Teiles (9a) anliegt, und dass der innere Teil (9b) am anderen Ende über eine Mutter (11) mit dem äußeren Teil verspannt ist.

4. Einrichtung nach Anspruch 3, **dadurch gekennzeichnet, dass** der Kopf (12) einen nicht kreisrunden Querschnitt aufweist und verdrehsicher formschlüssig am äußeren Teil (9a) anliegt, vorzugsweise im Bereich des Bodens (14) einer Betätigungsgabel (15).

## Claims

1. Arrangement for generating linear and/or rotary motion with two or more, especially four, electric motors whose motor shafts carry pinions (3a, 3b) which mesh directly with the external teeth of a common sun wheel (5a, 5b) and drive the latter, wherein the sun wheel carries a spindle nut (6) which acts on a threaded spindle (9) and sets the latter in linear motion upon rotation of the spindle nut (6), **characterized in that** the threaded spindle (9) is made in two or more parts, with the parts (9a, 9b) of the threaded spindle coaxially arranged and mechanically connected to each other.

2. Arrangement according to Claim 1, **characterized in that** the two parts (9a, 9b) of the threaded spindle (9) are connected to each other fixedly In rotation by a pin which transversely transfixes them and is preferably arranged near one end of the threaded spindle.

3. Arrangement according to Claim 1 or Claim 2, **characterized in that** the coaxially inner part of the threaded spindle [has] at one end a head (12) of larger diameter which bears on a shoulder of the outer part (9a), and **in that** the inner part (9b) is secured to the outer part by a nut (11) at the other end.

4. Arrangement according to Claim 3, **characterized in that** the head (12) has a non-circular cross-section and bears on the outer part (9a) fixedly in rotation and with a positive interlock, preferably in the region of the root (14) of an actuating devis (15).

## Revendications

1. Dispositif pour produire un mouvement longitudinal et/ou un mouvement rotatif, comprenant deux moteurs électriques ou plus, notamment quatre, dont les arbres portent des pignons (3a, 3b) qui s'engrènent directement dans la denture extérieure d'une roue planétaire commune (5a, 5b) et entraînent celle-ci, la roue planétaire portant un écrou de broche (6) qui agit sur une broche filetée (9) et fait décrire à celle-ci un mouvement longitudinal lorsqu'il tourne,
**caractérisé en ce que** la broche filetée (9) est réalisée en deux parties ou plus, les parties (9a, 9b) de la broche filetée étant coaxiales et étant reliées entre elles mécaniquement.

2. Dispositif selon la revendication 1, **caractérisé en ce que** les deux parties (9a, 9b) de la broche filetée (9) sont reliées, fixes en rotation, grâce à une tige qui les traverse transversalement et qui est disposée de préférence près d'une extrémité de la broche filetée.

3. Dispositif selon la revendication 1 ou 2, **caractérisé en ce que** la partie intérieure, coaxialement, de la broche filetée présente à une extrémité une tête (12) à diamètre élargi qui est appliquée contre un épaulement de la partie extérieure (9a), et **en ce que** la partie intérieure (9b), à l'autre extrémité, est reliée par serrage à la partie extérieure grâce à un écrou (11).

4. Dispositif selon la revendication 3, **caractérisé en ce que** la tête (12) présente une section transversale non circulaire et est appliquée par complémentarité de forme, fixe en rotation, contre la partie extérieure (9a), de préférence dans la zone du fond (14) d'une fourche d'actionnement (15).
